# EUROPEAN PATENT APPLICATION

(11) **EP 4 769 703 A1**
(43) Date of publication of application: **01.07.2026**
(21) Application number: 24866827.9
(22) Date of filing: 16.04.2024
(51) Int. Cl.: H01M 50/188, H01M 50/184, H01M 50/183

(54) **BATTERY CELL, BATTERY, AND ELECTRIC DEVICE**

(30) Priority: 18.09.2023 CN 202311203218
(71) Applicant: Contemporary Amperex Technology Co., Limited, Ningde, Fujian 352100 (CN)
(72) Inventor: WU, Kai, Ningde, Fujian 352100 (CN); LIN, Denghua, Ningde, Fujian 352100 (CN); CHEN, Wenwei, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/088013
(87) International publication number: WO 2025/060402

(57) **Abstract**

A battery cell, a battery, and an electric device, relating to the technical field of batteries. The battery cell comprises: a first shell wall, a pole, a first insulating seal, and a pad, wherein the pole comprises a penetration part and a first extension part, the first extension part extends to the outer side of the outer surface of or the inner side of the inner surface of the first shell wall, the penetration part and the first extension part constitute a first pole part, the first insulating seal is matched between the first pole part and the first shell wall, and the pad is arranged between the first pole part and the first shell wall and used for buffering the acting force applied to the first insulating seal by at least one of the first pole part and the first shell wall.

## Description

### CROSS-REFERENCE TO RELATED APPLICATION

The present application is presented based on Chinese Patent Application No. 202311203218.2 filed on September 18, 2023, and claims the priority to the Chinese Patent Application described above, the content of which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The power battery includes several battery cells. However, the reliability of the battery cells needs to be improved.

### SUMMARY

Embodiments of the present application provide a battery cell, a battery, and an electric device, which can improve the reliability of the battery cell.

In a first aspect, the embodiments of the present application provide a battery cell. The battery cell includes a first housing wall, a post terminal, a first insulating and sealing member, and a cushion member. The first housing wall is provided with a mounting hole, and the post terminal includes a penetration part provided in the mounting hole in a penetrating manner and a first extending part connected to the penetration part and extending in a direction away from a central axis of the mounting hole relative to the penetration part, where the first extending part extends to an outer side of an outer surface or an inner side of an inner surface of the first housing wall, and the penetration part and the first extending part constitute a first post terminal part. The first insulating and sealing member is fitted between the first post terminal part and the first housing wall. The cushion member is disposed between the first post terminal part and the first housing wall and is configured to buffer an acting force applied by at least one of the first post terminal part and the first housing wall to the first insulating and sealing member.

In the above technical solution, when the post terminal is mounted on the first housing wall, the first post terminal part applies an acting force to the first insulating and sealing member, causing the first insulating and sealing member to compress the first housing wall. Correspondingly, the first housing wall applies a reaction force to the first insulating and sealing member. In this case, the first insulating and sealing member is compressed by the first post terminal part and the first housing wall, making the first insulating and sealing member easy to crack. By providing the cushion member between the first post terminal part and the first housing wall, the acting force applied by the first post terminal part to the first insulating and sealing member and/or the reaction force applied by the first housing wall to the first insulating and sealing member are buffered, thereby reducing the risk of cracking of the first insulating and sealing member, helping to improve the reliability of the insulating and sealing fit between the first housing wall and the first post terminal part, and improving the reliability of the battery cell.

In some embodiments, the cushion member is disposed between the first housing wall and the first insulating and sealing member and/or between the first post terminal part and the first insulating and sealing member.

In the above technical solution, the assembling of the cushion member is facilitated, and the production difficulty is reduced. In addition, the structure and processing of the first insulating and sealing member can be simplified. For example, the first insulating and sealing member may be manufactured as an integrated member, thereby facilitating the processing and assembling of the first insulating and sealing member.

In some embodiments, the cushion member includes a first gasket. The first gasket is disposed between the first extending part and the first insulating and sealing member.

In the above technical solution, when the post terminal is mounted on the first housing wall and the first extending part compresses the first insulating and sealing member in a direction toward the first housing wall, because the first gasket is disposed between the first insulating and sealing member and the first extending part, the first gasket can reduce part of the acting force, thus reducing the acting force transmitted to the first insulating and sealing member and thereby reducing damage to the first insulating and sealing member and protecting the first insulating and sealing member.

In some embodiments, the material hardness of the first gasket is greater than the material hardness of the first insulating and sealing member.

In the above technical solution, the first gasket can well attenuate the compressive force transmitted to the first insulating and sealing member and more effectively alleviate the problem of cracking of the first insulating and sealing member.

In some embodiments, the first gasket protrudes from or is flush with a surface of the first insulating and sealing member on a side proximal to the penetration part in a direction close to the penetration part.

In the above technical solution, when the post terminal is mounted on the housing wall and the penetration part compresses the first insulating and sealing member in a direction toward the first housing wall, because the first gasket protrudes from or is flush with the surface of the first insulating and sealing member on the side proximal to the central axis of the mounting hole in the direction close to the central axis of the mounting hole, the first gasket can reduce part of the acting force, thus reducing the acting force transmitted to the first insulating and sealing member, thereby reducing damage to the first insulating and sealing member and protecting the first insulating and sealing member.

In some embodiments, the cushion member includes a second gasket. The second gasket is disposed between the first insulating and sealing member and a surface of the first housing wall on a side facing the first extending part, and the material hardness of the second gasket is less than the material hardness of the first insulating and sealing member.

In the above technical solution, when the post terminal is mounted on the first housing wall and the post terminal compresses the first insulating and sealing member in a direction toward the first housing wall, the first insulating and sealing member may transmit the acting force to the second gasket. Due to its relatively low material hardness, the second gasket can undergo compressive deformation to absorb the acting force, thereby reducing the reaction force fed back to the first insulating and sealing member, reducing damage to the first insulating and sealing member, and protecting the first insulating and sealing member.

In some embodiments, the cushion member includes a third gasket. The third gasket is disposed between the penetration part and the first insulating and sealing member.

In the above technical solution, when the post terminal is mounted on the first housing wall and the penetration part compresses the first insulating and sealing member in a direction toward the first housing wall, because the third gasket is disposed between the first insulating and sealing member and the penetration part, the third gasket can reduce part of the acting force, thus reducing the acting force transmitted to the first insulating and sealing member and thereby reducing damage to the first insulating and sealing member and protecting the first insulating and sealing member.

In some embodiments, the cushion member further includes a third gasket. The third gasket is disposed between the penetration part and the first insulating and sealing member, and the first gasket and the third gasket are an integrated member.

In the above technical solution, the configuration helps to reduce the difficulty in mounting and fixing the third gasket and also enables the first gasket and the third gasket to be mounted together, which is conducive to improving the overall assembly efficiency.

In some embodiments, the cushion member is formed as an annular structure extending around an entire circumference along a circumferential direction of the mounting hole.

In the above technical solution, the processing and assembling of the cushion member are facilitated.

In some embodiments, a fitting gap is provided between the penetration part and the first insulating and sealing member.

In the above technical solution, when the post terminal is mounted on the first housing wall and the penetration part compresses the first insulating and sealing member in a direction toward the first housing wall, because the fitting gap is provided between the first insulating and sealing member and the penetration part, it is not easy for the penetration part to directly apply force to the first insulating and sealing member, such that the acting force transmitted to the first insulating and sealing member can be reduced, thereby reducing damage to the first insulating and sealing member and protecting the first insulating and sealing member.

In some embodiments, a joint between the first extending part and the penetration part is provided with a first corner disposed facing the first housing wall, the first housing wall includes a second corner disposed corresponding to the first corner, and the first insulating and sealing member includes a fourth corner disposed corresponding to the second corner, where the first insulating and sealing member includes a second sub-part and a second portion, the material hardness of the second sub-part is less than the material hardness of the second portion, and the second sub-part defines the fourth corner.

In the above technical solution, by providing the second sub-part having a lower material hardness than the second portion, the second sub-part can be easily compressed and deformed under the force to absorb the force, thereby reducing the risk of cracking of the first insulating and sealing member from the fourth corner.

In some embodiments, the joint between the first extending part and the penetration part is provided with the first corner disposed facing the first housing wall, the first housing wall includes the second corner disposed corresponding to the first corner, and the first insulating and sealing member includes the fourth corner disposed corresponding to the second corner, where at least one of the second corner and the fourth corner is formed as a chamfer.

In the above technical solution, when the post terminal is assembled and fixed on the first housing wall, the second corner tends to compress the fourth corner, causing the first insulating and sealing member to crack from the position of the fourth corner. If the second corner is configured as a chamfer, the area where the second corner applies force to the fourth corner can be increased, such that the force application positions are dispersed, thereby reducing the compressive force concentration at the position of the fourth corner and reducing the risk of cracking of the first insulating and sealing member from the position of the fourth corner. If the fourth corner is configured as a chamfer, when the second corner applies force to the fourth corner, the force-bearing area of the fourth corner can be increased, such that the force applied to the position of the fourth corner is dispersed, thereby reducing the risk of cracking of the first insulating and sealing member from the position of the fourth corner. As such, by forming at least one of the second corner and the fourth corner as a chamfer, the risk of cracking of the first insulating and sealing member from the position of the fourth corner can be reduced.

In some embodiments, a joint between the first extending part and the penetration part is provided with a first corner disposed facing the first housing wall, and the first insulating and sealing member includes a third corner disposed corresponding to the first corner, where the first insulating and sealing member includes a first sub-part and a second portion, the material hardness of the first sub-part is less than the material hardness of the second portion, and the first sub-part defines the third corner.

In the above technical solution, by providing the first sub-part having a lower material hardness than the second portion, the first sub-part can be easily compressed and deformed under the force to absorb the force, thereby reducing the risk of cracking of the first insulating and sealing member from the third corner.

In some embodiments, the joint between the first extending part and the penetration part is provided with the first corner disposed facing the first housing wall, and the first insulating and sealing member includes the third corner disposed corresponding to the first corner, where at least one of the first corner and the third corner is formed as a chamfer.

In the above technical solution, when the post terminal is assembled and fixed on the first housing wall, the first corner tends to compress the third corner, causing the first insulating and sealing member to crack from the position of the third corner. If the first corner is configured as a chamfer, the area where the first corner applies force to the third corner can be increased, such that the force application positions are dispersed, thereby reducing the compressive force concentration at the position of the third corner and reducing the risk of cracking of the first insulating and sealing member from the position of the third corner. If the third corner is configured as a chamfer, when the first corner applies force to the third corner, the force-bearing area of the third corner can be increased, such that the force applied to the position of the third corner is dispersed, thereby reducing the risk of cracking of the first insulating and sealing member from the position of the third corner. As such, by forming at least one of the first corner and the third corner as a chamfer, the risk of cracking of the first insulating and sealing member from the position of the third corner can be reduced.

In some embodiments, the post terminal forms the first extending part through flanging and riveting.

In the above technical solution, the configuration facilitates the processing of the post terminal and helps to improve the reliability of the connection between the first extending part and the penetration part, thereby improving the assembling reliability between the post terminal and the first housing wall.

In some embodiments, the post terminal further includes a second extending part connected to the penetration part and extending in a direction away from the central axis L of the mounting hole relative to the penetration part. The second extending part and the first extending part extend to the inner side and the outer side of the first housing wall, respectively. The penetration part and the second extending part constitute a second post terminal part. The battery cell further includes a second insulating and sealing member fitted between the second post terminal part and the first housing wall and disposed separately from the first insulating and sealing member.

In the above technical solution, because the post terminal includes the first extending part and the second extending part disposed on the inner side and the outer side of the first housing wall, respectively, the fit between the post terminal and the first housing wall can be more stable and secure. In addition, because the insulating and sealing structure includes the first insulating and sealing member and the second insulating and sealing member that are disposed separately from each other, the first insulating and sealing member and the second insulating and sealing member may be independently mounted, thereby reducing the assembly difficulty and ensuring reliable insulating and sealing fit at all positions between the post terminal and the first housing wall.

In some embodiments, the post terminal includes a post terminal body and a post terminal cover plate. The post terminal body includes the first post terminal part and the second post terminal part. The first extending part extends to the outer side of the outer surface of the first housing wall. The post terminal cover plate lids a side of the first post terminal part distal to the second post terminal part, and the post terminal body is connected to the post terminal cover plate by welding. The material hardness of the second insulating and sealing member is less than the material hardness of the first insulating and sealing member.

In the above technical solution, the material hardness of the first insulating and sealing member is greater than the material hardness of the second insulating and sealing member. Compared with the first insulating and sealing member, the second insulating and sealing member is more easily compressible and deformable and exhibits better sealing effect. However, the first insulating and sealing member exhibits stronger heat resistance than the second insulating and sealing member. For example, the first insulating and sealing member is a plastic member, and the second insulating and sealing member is a rubber member. Therefore, during the welding of the post terminal body and the post terminal cover plate, the thermal impact on the second insulating and sealing member can be reduced as much as possible, thereby improving the reliability of the sealing between the first housing wall and the post terminal.

In some embodiments, the first extending part protrudes from the penetration part toward an outer side of the first housing wall to define a recess between the first extending part and the penetration part, an edge of the post terminal cover plate is disposed in the recess and is welded to the penetration part in a penetrating manner, and a welding structure formed by the welding is spaced apart from the first extending part.

In the above technical solution, the shrinkage stress generated by the solidification of the molten pool formed by welding can be blocked by the spacing and is difficult to be or less likely to be transmitted to the first extending part, thus alleviating the warping of the first extending part and enabling the first extending part to press tightly against the first insulating and sealing member and the second insulating and sealing member, thereby improving the insulation and sealing effect. In addition, because the edge of the post terminal cover plate is disposed in the recess and is welded to the penetration part in a penetrating manner, rather than being butt-welded to the first extending part, it is unnecessary to maintain a small assembly gap between the edge of the post terminal cover plate and the first extending part for butt welding purposes. Therefore, a relatively large spacing may be allowed between the edge of the post terminal cover plate and the first extending part, thereby improving the compatibility of the post terminal body. This is conducive to reducing the processing precision of the post terminal cover plate and the post terminal body.

In some embodiments, the battery cell has an accommodating cavity formed on an inner side of the first housing wall, the post terminal includes the post terminal body, the post terminal body is provided with an accommodating groove opening in a direction away from the accommodating cavity, the post terminal body is provided with a communication hole, and the communication hole penetrates through a groove wall of the accommodating groove on a side proximal to the accommodating cavity and communicates the accommodating cavity with the accommodating groove.

In the above technical solution, when the electrolyte is injected into the battery cell, the electrolyte may be injected into the accommodating groove and then flow toward the accommodating cavity through the communication hole, where the accommodating groove can serve as a buffer for the electrolyte, thereby mitigating issues such as electrolyte splashing and overflow. In addition, the side wall of the accommodating groove can prevent the electrolyte from splashing out to some extent, thereby reducing contamination caused by the electrolyte to the outside and facilitating fast electrolyte injection. In addition, because no separate liquid injection channel needs to be formed on the housing, special processing of the housing is unnecessary, which helps to reduce the structural complexity and processing difficulty of the housing.

In some embodiments, the battery cell includes a battery cell assembly, the battery cell assembly includes an active substance-coated part received in the accommodating cavity and a conductive part connected to the active substance-coated part, and the conductive part is provided in the communication hole in a penetrating manner to be at least partially received in the accommodating groove.

In the above technical solution, by allowing the conductive part to be at least partially received in the accommodating groove, the conductive part can at least partially occupy the space in the accommodating groove, thereby reducing the space of the accommodating cavity occupied by the conductive part and saving the space in the accommodating cavity to receive the active substance-coated part with a larger volume. This is conducive to increasing the energy density of the battery cell, or to reducing the dimension of the battery cell when the energy density of the battery cell remains unchanged.

In some embodiments, the post terminal includes the post terminal cover plate lidding the post terminal body. The post terminal cover plate is provided with a liquid injection hole capable of communicating with the accommodating groove, and the battery cell further includes a sealing structure for sealing the liquid injection hole.

In the above technical solution, by forming the liquid injection hole on the post terminal cover plate with a relatively small opening and a position close to the outside, reliable sealing of the liquid injection inlet can be more easily achieved through the sealing structure, thereby improving the working reliability of the battery cell and enabling flexible and diversified design of the sealing structure.

In a second aspect, the embodiments of the present application further provide a battery. The battery includes the battery cell according to any one of the above solutions.

In the above technical solution, the reliability of the battery cell according to the embodiments of the present application is improved, thereby facilitating the improvement of the performance of the battery.

In a third aspect, the embodiments of the present application further provide an electric device. The electric device includes the battery according to any one of the above solutions.

In the above technical solution, because the performance of the battery is improved, the power performance of the electric device during operation can be improved.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a structural schematic view of a vehicle according to some embodiments of the present application;
FIG. 2 is an exploded view of the structure of a battery according to some embodiments of the present application;
FIG. 3 is a structural schematic view of a battery cell according to some embodiments of the present application;
FIG. 4 is an orthographic projection view of a battery cell according to some embodiments of the present application;
FIG. 5 is a cross-sectional view along line A-A in FIG. 4;
FIG. 6 is a partially enlarged view of the circled portion B in FIG. 5;
FIG. 7 is a partial cross-sectional view of a battery cell according to some embodiments of the present application;
FIG. 8 is a partial cross-sectional view of a battery cell according to some embodiments of the present application;
FIG. 9 is an exploded schematic view of an insulating and sealing structure and a cushion member according to some embodiments of the present application;
FIG. 10 is a partial cross-sectional view of a battery cell according to some embodiments of the present application;
FIG. 11 is a partial cross-sectional view of a battery cell according to some embodiments of the present application;
FIG. 12 is a partial cross-sectional view of a battery cell according to some embodiments of the present application; and
FIG. 13 is a schematic view illustrating the connection between a battery cell and a busbar component according to some embodiments of the present application.

Reference numerals: vehicle 1000; first direction X; second direction Y; third direction Z; battery 100; controller 200; motor 300; case 101; first case body 1011; second case body 1012; battery cell 102; busbar component 103; housing 1; accommodating cavity 11; mounting hole 12; central axis L; first housing wall 13; second corner 131; second housing wall 14; post terminal 2; post terminal body 3; recess 31; first extending part 32; penetration part 33; first corner 34; first post terminal part 35; accommodating groove 36; communication hole 37; second extending part 38; second post terminal part 39; post terminal cover plate 4; liquid injection hole 43; sealing structure 6; first sealing member 61; second sealing member 62; battery cell assembly 7; active substance-coated part 71; conductive part 72; insulating and sealing structure 8; third corner 81; fourth corner 82; first sub-part 831; second sub-part 832; second portion 84; first insulating and sealing member 85; second insulating and sealing member 86; third insulating and sealing member 87; cushion member 9; first gasket 91; third gasket 93; second gasket 92.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "install", "connect", and "attach" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the present application, battery cells may include lithium-ion secondary batteries, lithium-ion primary batteries, lithium-sulfur batteries, sodium-lithium-ion batteries, sodium-ion batteries, magnesium-ion batteries, and the like. This is not limited in the embodiments of the present application. The battery cell may be cylindrical, flat, rectangular parallelepiped-shaped, or in other shapes. This is also not limited in the embodiments of the present application. According to the way of encapsulation, battery cells are typically divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module group, a battery pack, or the like. A battery module group generally includes a plurality of battery cells. A battery pack generally includes a case used for encapsulating one or a plurality of battery cells or one or a plurality of battery module groups. The case can prevent liquid or other foreign matters from affecting the charging or discharging of the battery cells.

The battery cell includes a housing, a battery cell assembly, and an electrolyte, and the housing is configured to accommodate the battery cell assembly and the electrolyte. The battery cell assembly includes at least one electrode assembly. The electrode assembly is composed of a positive electrode plate, a negative electrode plate, and a separator, and the electrode assembly may be of a wound structure, a stacked structure, or the like. A battery cell primarily works by the movement of metal ions between the positive electrode plate and the negative electrode plate.

The positive electrode plate may generally include a positive electrode current collector and a positive electrode active substance layer. The positive electrode active substance layer is directly or indirectly applied to the positive electrode current collector. The positive electrode current collector that is not coated with the positive electrode active substance layer protrudes from the positive electrode current collector coated with the positive electrode active substance layer. The positive electrode current collector that is not coated with the positive electrode active substance layer serves as a positive electrode tab. Taking lithium-ion batteries as an example, the material of the positive electrode current collector may be aluminum, and the material of the positive electrode active substance layer may be lithium cobaltate, lithium iron phosphate, ternary lithium, lithium manganate, or the like.

The negative electrode plate may generally include a negative electrode current collector and a negative electrode active substance layer. The negative electrode active substance layer is directly or indirectly applied to the negative electrode current collector. The negative electrode current collector that is not coated with the negative electrode active substance layer protrudes from the negative electrode current collector coated with the negative electrode active substance layer. The negative electrode current collector that is not coated with the negative electrode active substance layer serves as a negative electrode tab. The material of the negative electrode current collector may be copper, and the material of the negative electrode active substance layer may be carbon, silicon, or the like.

In order to ensure the passing of a large current without fusing, a plurality of positive electrode tabs are provided and are stacked together to form a tab part of the positive electrode, and a plurality of negative electrode tabs are provided and are stacked together to form a tab part of the negative electrode. Post terminals are disposed on the housing. The tab part of the positive electrode is electrically connected to the post terminal of the positive electrode, and the tab part of the negative electrode is electrically connected to the post terminal of the negative electrode. For example, the tab part may be connected to the post terminal to form a direct electrical connection between the tab part and the post terminal. For another example, the battery cell assembly may include an adapting piece, the tab part is connected to the adapting piece, and the adapting piece is connected to the post terminal to form an indirect electrical connection between the tab part and the post terminal.

The material of the separator is not limited, and may be, e.g., polypropylene or polyethylene.

In some battery cells in the related art, the post terminal is mounted on the housing by means of riveting. To achieve the insulation and sealing between the housing and the post terminal, an insulating plastic is generally provided between the post terminal and the housing before riveting the post terminal. However, during riveting of the post terminal, the post terminal is deformed under the force and compresses the insulating plastic. Thus, the weak part of the insulating plastic is prone to cracking under the force. Once the insulating plastic cracks, the reliability of the insulation and sealing between the housing and the post terminal will be affected, resulting in a decrease in the reliability of the battery cell.

To this end, the embodiments of the present application provide a battery cell. The battery cell includes: a housing, a post terminal, and an insulating and sealing structure. The housing includes a first housing wall. The first housing wall is provided with a mounting hole, and the post terminal includes a penetration part provided in the mounting hole in a penetrating manner and a first extending part connected to the penetration part and extending in a direction away from a central axis of the mounting hole relative to the penetration part, where the first extending part extends to an outer side of an outer surface or an inner side of an inner surface of the first housing wall, and the penetration part and the first extending part constitute a first post terminal part. The insulating and sealing structure includes a first insulating and sealing member fitted between the first post terminal part and the first housing wall. A cushion member is disposed between the first post terminal part and the first housing wall and is configured to buffer an acting force applied by at least one of the first post terminal part and the first housing wall to the first insulating and sealing member.

As such, when the post terminal is mounted on the first housing wall, the first post terminal part applies an acting force to the first insulating and sealing member, and correspondingly, the first housing wall applies a reaction force to the first insulating and sealing member. In this case, the first insulating and sealing member is compressed by the first post terminal part and the first housing wall, making the weak position of the first insulating and sealing member easy to crack. By providing the cushion member between the first post terminal part and the first housing wall, the acting force applied by the first post terminal part to the first insulating and sealing member and/or the reaction force applied by the first housing wall to the first insulating and sealing member are buffered, thereby reducing the risk of cracking at the weak position of the first insulating and sealing member, helping to improve the reliability of the insulating and sealing fit between the first housing wall and the first post terminal part, and improving the reliability of the battery cell.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecrafts may include airplanes, rockets, space shuttles, spaceships, and the like.

In the following embodiments, for ease of description, the present application is illustrated by taking a vehicle 1000 as an example of the electric device according to an embodiment of the present application.

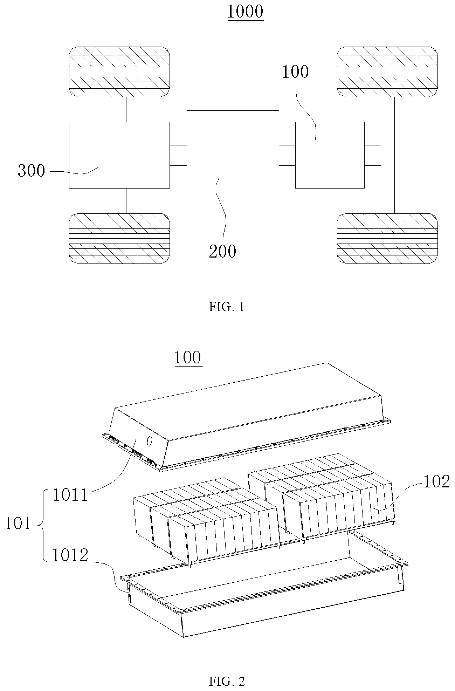

As shown in FIG. 1, FIG. 1 is a structural schematic view of a vehicle 1000 according to some embodiments of the present application. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be provided at the bottom, head, or tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is used for controlling the battery 100 to power the motor 300, e.g., for operation power needed by the vehicle 1000 for start-up, navigation, and driving.

In some embodiments of the present application, the battery 100 may not only serve as an operation power source for the vehicle 1000, but also as a driving power source for the vehicle 1000 to, instead of or in part instead of fuel or natural gas, provide driving power for the vehicle 1000.

Referring to FIG. 2, FIG. 2 is an exploded view of the structure of a battery 100 according to some embodiments of the present application. The battery 100 includes a case 101 and a plurality of battery cells 102, and the battery cells 102 are accommodated in the case 101. The case 101 is configured to provide an assembly space for the battery cells 102, and the case 101 may be in various structures. In some embodiments, the case 101 may include a first case body 1011 and a second case body 1012. The first case body 1011 and the second case body 1012 are mutually lidded with each other. The first case body 1011 and the second case body 1012 jointly define an assembly space for accommodating the battery cells 102. The second case body 1012 may be of a hollow structure with one end open, and the first case body 1011 may be of a plate-shaped structure. The first case body 1011 lids the open side of the second case body 1012, such that the first case body 1011 and the second case body 1012 jointly define an assembly space; the first case body 1011 and the second case body 1012 may also both be of a hollow structure with one side open, and the open side of the first case body 1011 lids the open side of the second case body 1012. Certainly, the case 101 formed by the first case body 1011 and the second case body 1012 may be in various shapes, such as a cylinder and a rectangular parallelepiped.

In the battery 100, the plurality of battery cells 102 may be connected in series, in parallel, or in series-parallel. The series-parallel connection means that both series connection and parallel connection are present for the connection among the plurality of battery cells 102. The plurality of battery cells 102 may be directly connected in series, in parallel, or in series-parallel, and then the whole formed by the plurality of battery cells 102 is accommodated in the case 101. Certainly, the situation may be that in the battery 100, the plurality of battery cells 102 are first connected in series, in parallel, or in series-parallel to form battery modules, and then the plurality of battery modules are connected in series, in parallel, or in series-parallel to form a whole and accommodated in the case 101. The battery 100 may further include other structures. For example, the battery 100 may further include a busbar component for achieving electrical welding between the plurality of battery cells 102.

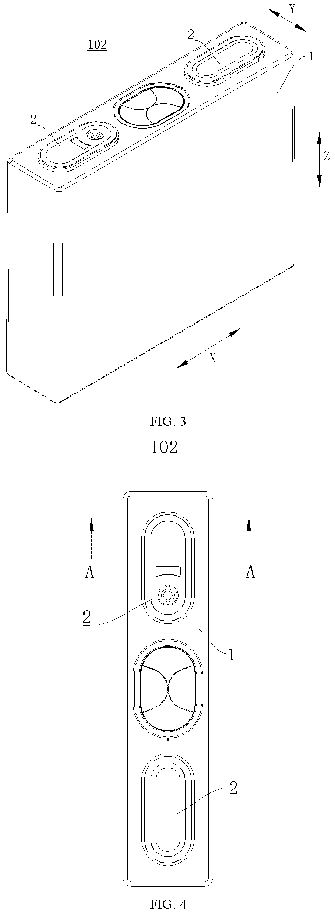

Each battery cell 102 may be a secondary battery or a primary battery; it may also be a lithium-sulfur battery, a sodium-ion battery, or a magnesium-ion battery, but is not limited thereto. The battery cell 102 may be cylindrical, flat, rectangular parallelepiped-shaped, or the like. For example, referring to the embodiment shown in FIG. 3, the length direction of the battery cell 102 is a first direction X, the width direction of the battery cell 102 is a second direction Y, the height direction of the battery cell 102 is a third direction Z, and the first direction X, the second direction Y, and the third direction Z are mutually perpendicular to each other.

In some embodiments of the present application, with reference to FIGs. 3 to 6, the battery cell 102 includes: a housing 1 and a post terminal 2. The post terminal 2 is disposed on the housing 1, and an accommodating cavity 11 is formed inside the housing 1. Illustratively, the battery cell 102 includes a battery cell assembly 7. The battery cell assembly 7 may include an active substance-coated part 71 and a conductive part 72 connected to the active substance-coated part 71. The active substance-coated part 71 is received in the accommodating cavity 11, and the conductive part 72 is welded to the post terminal 2, such that the conductive part 72 is electrically connected between the active substance-coated part 71 and the post terminal 2.

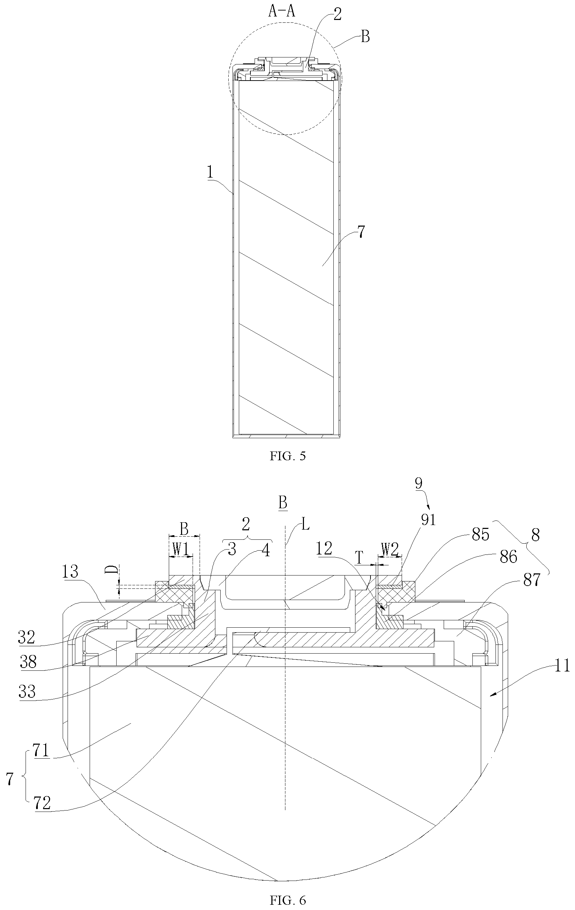

With reference to FIGs. 5 and 6, the housing 1 includes a first housing wall 13. The first housing wall 13 is provided with a mounting hole 12. The post terminal 2 is provided in the mounting hole 12 in a penetrating manner to be mounted on the first housing wall 13. The post terminal 2 includes a penetration part 33 and a first extending part 32. The penetration part 33 is provided in the mounting hole 12 in a penetrating manner, that is, the penetration part 33 is at least partially located in the mounting hole 12. With the axial direction of the mounting hole 12 used as the projection direction and the plane perpendicular to the axial direction of the mounting hole 12 used as the projection plane, the projection of the penetration part 33 on the projection plane falls within the projection range of the mounting hole 12 on the projection plane, thereby enabling the penetration part 33 to be provided in the mounting hole 12 in a penetrating manner.

With reference to FIGs. 5 and 6, the first extending part 32 is connected to the penetration part 33 and extends in a direction away from the central axis L of the mounting hole 12 relative to the penetration part 33, and the first extending part 32 extends to the outer side of the outer surface or the inner side of the inner surface of the first housing wall 13. Two side surfaces of the first housing wall 13 in a wall thickness direction are the outer surface and the inner surface, respectively. The inner surface is a surface of the first housing wall 13 on a side facing the accommodating cavity 11, and the outer surface is a surface of the first housing wall 13 on a side distal to the accommodating cavity 11. The side of the outer surface distal to the accommodating cavity 11 is referred to as the outer side of the outer surface, and the side of the inner surface facing the accommodating cavity 11 is referred to as the inner side of the inner surface. The expression "the first extending part 32 extends to the outer side of the outer surface or the inner side of the inner surface of the first housing wall 13" means that the first extending part 32 at least partially faces the first housing wall 13, and with the axial direction of the mounting hole 12 used as the projection direction and the plane perpendicular to the axial direction of the mounting hole 12 used as the projection plane, the projection of the first extending part 32 on the projection plane and the projection of the first housing wall 13 on the projection plane have an overlapping region, and the portion of the first extending part 32 corresponding to the overlapping region faces the first housing wall 13.

With reference to FIGs. 5 and 6, the penetration part 33 and the first extending part 32 constitute a first post terminal part 35. The battery cell 102 includes a first insulating and sealing member 85 fitted between the first post terminal part 35 and the first housing wall 13, that is, the first insulating and sealing member 85 is at least partially sandwiched between the first post terminal part 35 and the first housing wall 13, such that the first post terminal part 35 is indirectly fitted with the first housing wall 13 through the first insulating and sealing member 85, thereby achieving insulation and sealing between the first post terminal part 35 and the first housing wall 13.

With reference to FIGs. 5 and 6, the battery cell 102 further includes a cushion member 9. The cushion member 9 is disposed between the first post terminal part 35 and the first housing wall 13 and is configured to buffer the acting force applied by at least one of the first post terminal part 35 and the first housing wall 13 to the first insulating and sealing member 85. In this way, when the post terminal 2 is mounted on the first housing wall 13, the first post terminal part 35 applies an acting force to the first insulating and sealing member 85, and correspondingly, the first housing wall 13 applies a reaction force to the first insulating and sealing member 85 (that is, the acting force applied by the first housing wall 13 to the first insulating and sealing member 85 may be the reaction force). In this case, the first insulating and sealing member 85 is compressed by the first post terminal part 35 and the first housing wall 13, making the weak position of the first insulating and sealing member 85 easy to crack. By providing the cushion member 9 between the first post terminal part 35 and the first housing wall 13, the acting force applied by the first post terminal part 35 to the first insulating and sealing member 85 and/or the reaction force applied by the first housing wall 13 to the first insulating and sealing member 85 are buffered, thereby reducing the risk of cracking at the weak position of the first insulating and sealing member 85, helping to improve the reliability of the insulating and sealing fit between the first housing wall 13 and the first post terminal part 35, and improving the reliability of the battery cell 102.

In short, by providing the cushion member 9, the acting force applied by the first post terminal part 35 to the first insulating and sealing member 85 can be reduced, and/or the reaction force applied by the first housing wall 13 to the first insulating and sealing member 85 can be reduced, thereby reducing damage to the first insulating and sealing member 85. Therefore, the first insulating and sealing member 85 is protected, and the problem of cracking of the first insulating and sealing member 85 is alleviated.

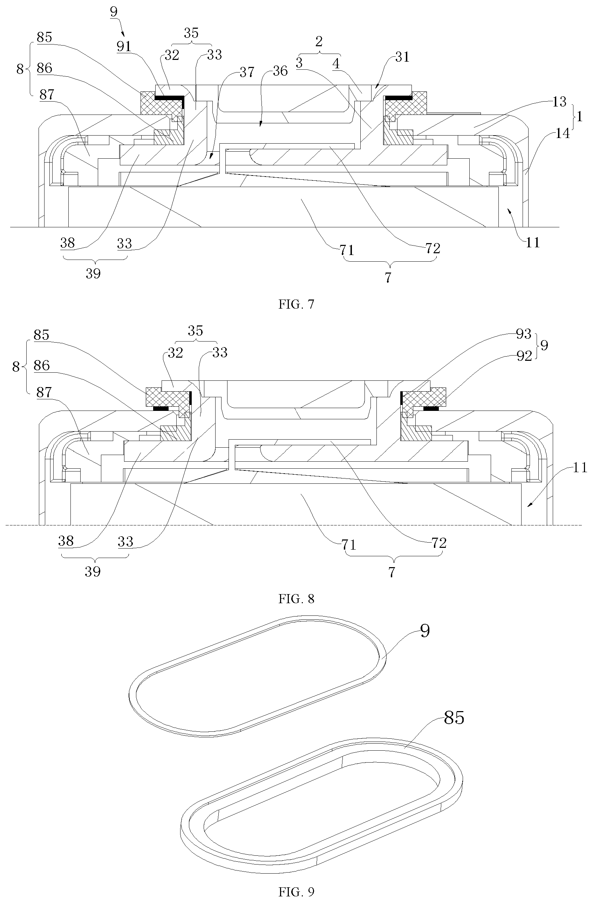

It is worth noting that the arrangement position and buffering manner of the cushion member 9 are not limited, as long as the damage to the first insulating and sealing member 85 can be reduced during the process of assembling the post terminal 2 on the first housing wall 13. For example, in some embodiments, as shown in FIG. 6 and FIG. 7, the cushion member 9 may be disposed between the first housing wall 13 and the first insulating and sealing member 85 and/or between the first post terminal part 35 and the first insulating and sealing member 85. That is, the cushion member 9 may be disposed at at least one of the following positions: between the first housing wall 13 and the first insulating and sealing member 85, and between the first post terminal part 35 and the first insulating and sealing member 85. As such, the assembling of the cushion member 9 is facilitated, and the production difficulty is reduced. In addition, the structure and processing of the first insulating and sealing member 85 can be simplified. For example, the first insulating and sealing member 85 may be manufactured as an integrated member, thereby facilitating the processing and assembling of the first insulating and sealing member 85.

Certainly, the present application is not limited thereto. For example, in other embodiments of the present application, the cushion member 9 may also be disposed at other positions. Illustratively, the first insulating and sealing member 85 may also be configured in an assembly form. In this case, the cushion member 9 may be disposed between a plurality of components of the first insulating and sealing member 85, and the material hardness of the cushion member 9 may be set to be less than the material hardness of the first insulating and sealing member 85. When the acting force generated by the assembling of the post terminal 2 and the first housing wall 13 is applied to the first insulating and sealing member 85, the plurality of components of the first insulating and sealing member 85 may move relative to each other, such that the cushion member 9 can be compressed and deformed to absorb the acting force, thereby reducing damage to the first insulating and sealing member 85 and protecting the first insulating and sealing member 85.

In some embodiments, referring to FIGs. 6 and 7, the cushion member 9 may include a first gasket 91. The first gasket 91 is disposed between the first extending part 32 and the first insulating and sealing member 85. As such, when the post terminal 2 is mounted on the first housing wall 13 and the first extending part 32 compresses the first insulating and sealing member 85 in a direction toward the first housing wall 13 (for example, compressing the first insulating and sealing member 85 along the axial direction of the mounting hole 12), because the first gasket 91 is disposed between the first insulating and sealing member 85 and the first extending part 32, the first gasket 91 can reduce part of the acting force, thus reducing the acting force transmitted to the first insulating and sealing member 85 and thereby reducing damage to the first insulating and sealing member 85 and protecting the first insulating and sealing member 85.

It is worth noting that the material hardness of the first gasket 91 and the material hardness of the first insulating and sealing member 85 are not limited. For example, the material hardness of the first gasket 91 may be greater than the material hardness of the first insulating and sealing member 85. As such, the first gasket 91 can well attenuate the compressive force transmitted to the first insulating and sealing member 85 and more effectively alleviate the problem of cracking of the first insulating and sealing member 85. For example, the first insulating and sealing member 85 may be a plastic member, and the first gasket 91 may be a metal member, and as such, the material hardness of the first gasket 91 is greater than the material hardness of the first insulating and sealing member 85. Illustratively, the first gasket 91 may be made of steel, such as SUS304, SUS316, or SPCC, or made of aluminum, such as Al 1060.

Illustratively, as shown in FIG. 6, the thickness D of the first gasket 91 in the axial direction of the mounting hole 12 may range from 0.05 mm to 2 mm. This ensures that the thickness of the first gasket 91 is not too thin, thereby maintaining sufficient strength to provide effective support and well protect the first insulating and sealing member 85; in addition, the thickness of the first gasket 91 is not too thick, thereby reducing space occupation of the first gasket.

Illustratively, as shown in FIG. 6, with the axial direction of the mounting hole 12 used as the projection direction and the plane perpendicular to the axial direction of the mounting hole 12 used as the projection plane, the width dimension, along the radial direction of the mounting hole 12, of the overlapping region between the projection of the first gasket 91 on the projection plane and the projection of the first extending part 32 on the projection plane is denoted as W1 (that is, W1 refers to the projection width of the overlap between the first extending part 32 and the first gasket 91), and the width dimension, along the radial direction of the mounting hole 12, of the projection of the first extending part 32 on the projection plane is denoted as B (that is, B refers to the riveting and flanging width of the post terminal 2), where W1 ≥ 0.5 mm and/or 0.05B ≤ W1 ≤ 0.95B. Therefore, the first extending part 32 and the first cushion member 91 have a relatively sufficient overlapping width, thereby allowing the first gasket 91 to provide effective force-bearing support and better protect the first insulating and sealing member 85.

Illustratively, as shown in FIG. 6, the width dimension, along the radial direction of the mounting hole 12, of the overlapping region between the projection of the surface of the first insulating and sealing member 85 on the side facing the first extending part 32 on the projection plane and the projection of the first extending part 32 on the projection plane is denoted as W2 (that is, W2 refers to the projection width of the overlap between the first extending part 32 and the first insulating and sealing member 85), where 0.05B ≤ W2 ≤ 0.95B. Therefore, the first extending part 32 and the first insulating and sealing member 85 have a relatively sufficient overlapping width, which enables the first extending part 32 to effectively and tightly press against the first insulating and sealing member 85, thereby allowing the first insulating and sealing member 85 to provide a relatively effective insulation and sealing effect.

Illustratively, as shown in FIG. 6, the first gasket 91 protrudes from or is flush with a surface of the first insulating and sealing member 85 on a side proximal to the penetration part 33 in a direction close to the penetration part 33. As such, when the post terminal 2 is mounted on the first housing wall 13 and the penetration part 33 compresses the first insulating and sealing member 85 in a direction toward the first housing wall 13 (for example, compressing the first insulating and sealing member 85 along the radial direction of the mounting hole 12), because the first gasket 91 protrudes from or is flush with a surface of the first insulating and sealing member 85 on a side proximal to the central axis L of the mounting hole 12 in a direction close to the central axis L of the mounting hole 12, the first gasket 91 can reduce part of the acting force, thus reducing the acting force transmitted to the first insulating and sealing member 85 and thereby reducing damage to the first insulating and sealing member 85 and protecting the first insulating and sealing member 85.

In some embodiments, the gap T between the first gasket 91 and the penetration part 33 may be greater than or equal to 0.05 mm, thereby facilitating the assembling of the first gasket 91 and the post terminal 2 and meeting the requirements for the assembly gap. Further, when the first gasket 91 protrudes from or is flush with a surface of the first insulating and sealing member 85 on a side proximal to the penetration part 33 in a direction close to the penetration part 33, the gap T between the first gasket 91 and the penetration part 33 may be greater than or equal to 0.05 mm, thereby facilitating the assembling of the first gasket 91 and the post terminal 2 and meeting the requirements for the assembly gap.

In some embodiments, the battery cell 102 includes an insulating and sealing structure 8 fitted between the first housing wall 13 and the post terminal 2, that is, the insulating and sealing structure 8 is at least partially sandwiched between the first housing wall 13 and the post terminal 2, such that the post terminal 2 is indirectly fitted with the first housing wall 13 through the insulating and sealing structure 8, thereby achieving insulation and sealing between the first housing wall 13 and the post terminal 2. The post terminal 2 further includes a second extending part 38 connected to the penetration part 33 and extending in a direction away from the central axis L of the mounting hole 12 relative to the penetration part 33. The second extending part 38 and the first extending part 32 extend to the inner side and the outer side of the first housing wall 13, respectively. The penetration part 33 and the second extending part 38 constitute a second post terminal part 39. The insulating and sealing structure 8 includes a first insulating and sealing member 85 fitted between the first post terminal part 35 and the first housing wall 13 and a second insulating and sealing member 86 fitted between the second post terminal part 39 and the first housing wall 13. It can be understood that the first post terminal part 35 and the second post terminal part 39 share the penetration part 33.

The second insulating and sealing member 86 and the first insulating and sealing member 85 are roughly located on the inner side and the outer side of the first housing wall 13, respectively. The material hardness of the second insulating and sealing member 86 is less than the material hardness of the first insulating and sealing member 85, thereby providing good sealing performance due to the compressibility and deformation. For example, the second insulating and sealing member 86 may be a rubber member. As such, when the material hardness of the first gasket 91 is greater than the material hardness of the first insulating and sealing member 85, the first gasket 91 can also provide effective support. This allows the compression amount of the second insulating and sealing member 86 to be better controlled to achieve an effective sealing effect, thereby improving the sealing fit between the post terminal 2 and the first housing wall 13.

In some embodiments, referring to FIG. 8, the cushion member 9 may include a second gasket 92. The second gasket 92 is disposed between the first insulating and sealing member 85 and a surface of the first housing wall 13 on a side facing the first extending part 32. For example, when the first extending part 32 extends to the outer side of the outer surface of the first housing wall 13, the second gasket 92 is disposed between the first extending part 32 and the outer surface of the first housing wall 13. For another example, when the first extending part 32 extends to the inner side of the inner surface of the first housing wall 13, the second gasket 92 is disposed between the first extending part 32 and the inner surface of the first housing wall 13, and the material hardness of the second gasket 92 is less than the material hardness of the first insulating and sealing member 85.

As such, when the post terminal 2 is mounted on the first housing wall 13 and the post terminal 2 compresses the first insulating and sealing member 85 in a direction toward the first housing wall 13 (for example, compressing the first insulating and sealing member 85 along the axial direction of the mounting hole 12), the first insulating and sealing member 85 can transmit the acting force to the second gasket 92. Due to its relatively low material hardness, the second gasket 92 can undergo compressive deformation to absorb the acting force, thereby reducing the reaction force fed back to the first insulating and sealing member 85, reducing damage to the first insulating and sealing member 85, and protecting the first insulating and sealing member 85.

In some embodiments, referring to FIGs. 7 and 8, the cushion member 9 may include a third gasket 93. The third gasket 93 is disposed between the penetration part 33 and the first insulating and sealing member 85. As such, when the post terminal 2 is mounted on the first housing wall 13 and the penetration part 33 compresses the first insulating and sealing member 85 in a direction toward the first housing wall 13 (for example, compressing the first insulating and sealing member 85 along the radial direction of the mounting hole 12), because the third gasket 93 is disposed between the first insulating and sealing member 85 and the penetration part 33, the third gasket 93 can reduce part of the acting force, thus reducing the acting force transmitted to the first insulating and sealing member 85 and thereby reducing damage to the first insulating and sealing member 85 and protecting the first insulating and sealing member 85.

It is worth noting that the material hardness of the third gasket 93 and the material hardness of the first insulating and sealing member 85 are not limited. For example, the material hardness of the third gasket 93 may be greater than the material hardness of the first insulating and sealing member 85. As such, the third gasket 93 can well attenuate the compressive force transmitted to the first insulating and sealing member 85. For another example, the material hardness of the third gasket 93 may also be less than the material hardness of the first insulating and sealing member 85. As such, the third gasket 93 can absorb the compressive force from the first post terminal part 35 through deformation, thereby reducing the compressive force transmitted to the first insulating and sealing member 85.

In some embodiments, the cushion member 9 may include at least two of the first gasket 91, the third gasket 93, and the second gasket 92, that is, the cushion member 9 may include any two of the first gasket 91, the third gasket 93, and the second gasket 92, or may further include all three of the first gasket 91, the third gasket 93, and the second gasket 92 simultaneously, thereby providing multi-angle protection for the first insulating and sealing member 85 and better reducing damage caused by the first insulating and sealing member 85.

In some embodiments, when the cushion member 9 includes both the first gasket 91 and the third gasket 93, the first gasket 91 and the third gasket 93 may be made into an integrated member. This helps to reduce the difficulty in mounting and fixing the third gasket 93 and also enables the first gasket 91 and the third gasket 93 to be mounted together, which is conducive to improving the overall assembly efficiency.

In some embodiments, a fitting gap is provided between the first insulating and sealing member 85 and the penetration part 33. In this way, when the post terminal 2 is mounted on the first housing wall 13 and the penetration part 33 compresses the first insulating and sealing member 85 in a direction toward the first housing wall 13 (for example, compressing the first insulating and sealing member 85 along the radial direction of the mounting hole 12), due to the presence of the fitting gap between the first insulating and sealing member 85 and the penetration part 33, the penetration part 33 is less likely to directly compress the first insulating and sealing member 85. This can reduce the acting force transmitted to the first insulating and sealing member 85, thereby reducing damage to the first insulating and sealing member 85 and protecting the first insulating and sealing member 85. In addition, when the fitting gap is provided between the first insulating and sealing member 85 and the penetration part 33, the third gasket 93 may be omitted, thereby reducing costs. Certainly, the present application is not limited thereto. For example, the third gasket 93 may also be provided as required, and a fitting gap is provided between the third gasket 93 and the penetration part 33.

In some embodiments, with reference to FIG. 9, the cushion member 9 is formed as an annular structure extending around the entire circumference along a circumferential direction of the mounting hole 12. For example, at least one of the first gasket 91, the second gasket 92, and the third gasket 93 is formed as an annular structure extending around the entire circumference along the circumferential direction of the mounting hole 12. As such, the processing and assembling of the cushion member 9 are facilitated. For example, the first gasket 91 may be formed as an annular structure extending around the entire circumference along the circumferential direction of the mounting hole 12, thereby facilitating the processing and assembling of the first gasket 91. For example, the second gasket 92 may be formed as an annular structure extending around the entire circumference along the circumferential direction of the mounting hole 12, thereby facilitating the processing and assembling of the second gasket 92. For example, the third gasket 93 may be formed as an annular structure extending around the entire circumference along the circumferential direction of the mounting hole 12, thereby facilitating the processing and assembling of the third gasket 93.

Certainly, the present application is not limited thereto. For example, in other embodiments of the present application, the cushion member 9, such as at least one of the first gasket 91, the second gasket 92, and the third gasket 93, may also be processed into a discontinuous structure arranged at intervals along the circumferential direction of the mounting hole 12, thereby helping to save materials.

In some embodiments of the present application, as shown in FIGs. 7 and 8, the post terminal 2 forms the first extending part 32 through flanging and riveting. That is, after the post terminal 2 is assembled into the mounting hole 12 through the penetration part 33, the flanging and riveting process is adopted to form the first extending part 32. As such, this facilitates the processing of the post terminal 2 and helps to improve the reliability of the connection between the first extending part 32 and the penetration part 33, thereby improving the assembling reliability between the post terminal 2 and the first housing wall 13.

Specifically, during the flanging and riveting of the post terminal 2, due to the outward flanging force, the first extending part 32 tends to apply a compressive force along the axial direction of the mounting hole 12 to the first insulating and sealing member 85, while the penetration part 33 tends to apply a compressive force along the radial direction of the mounting hole 12 to the first insulating and sealing member 85. As a result, the first insulating and sealing member 85 is prone to cracking under the pressure along the axial direction and/or radial direction of the mounting hole 12. By providing the cushion member 9 to buffer the acting force applied to the first insulating and sealing member 85, the problem of cracking of the first insulating and sealing member 85 can be alleviated.

For example, the first gasket 91 may be disposed between the first insulating and sealing member 85 and the first extending part 32. In this way, when the first extending part 32 is formed through the flanging and riveting process, the first gasket 91 can provide support, thereby alleviating the problem of cracking of the first insulating and sealing member 85 due to the direct compression exerted by the first extending part 32 on the first insulating and sealing member 85.

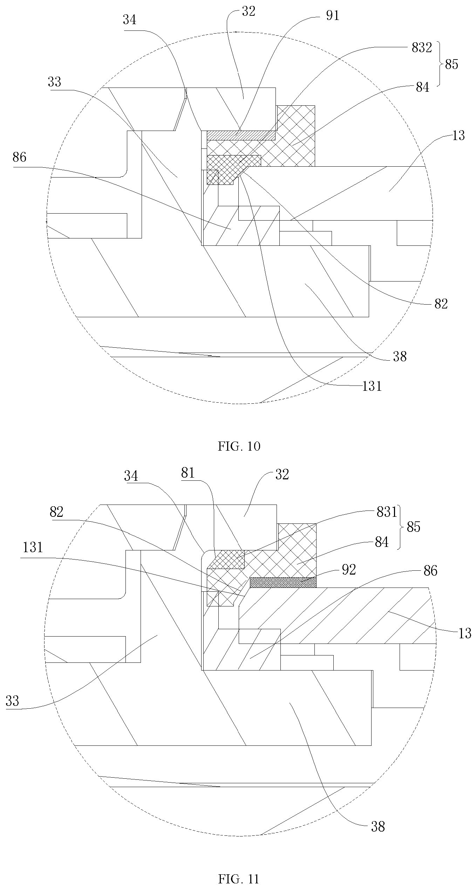

In some embodiments of the present application, as shown in FIG. 10, the joint between the first extending part 32 and the penetration part 33 is provided with a first corner 34 disposed facing the first housing wall 13, that is, a side of the joint between the first extending part 32 and the penetration part 33 proximal to the first housing wall 13 is formed as the first corner 34. The first housing wall 13 includes a second corner 131 disposed corresponding to the first corner 34, that is, the corner of the first housing wall 13 proximal to the first corner 34 is the second corner 131. The first insulating and sealing member 85 includes a fourth corner 82 disposed corresponding to the second corner 131, where the first insulating and sealing member 85 includes a second sub-part 832 and a second portion 84, the material hardness of the first sub-part 831 is less than the material hardness of the second portion 84, and the second sub-part 832 defines the fourth corner 82.

Because the first insulating and sealing member 85 includes the fourth corner 82 disposed corresponding to the second corner 131, when the post terminal 2 is assembled and fixed on the first housing wall 13, the post terminal 2 compresses the first insulating and sealing member 85, and correspondingly, the first insulating and sealing member 85 compresses the first housing wall 13. The first housing wall 13 then applies a reaction force to the first insulating and sealing member 85. In addition, the first insulating and sealing member 85 is subjected to a relatively large reaction force from the second corner 131 of the first housing wall 13 at the fourth corner 82, and is thus prone to cracking. By providing the second sub-part 832 having a lower material hardness than the second portion 84, the second sub-part 832 may be easily compressed and deformed under the force to absorb the force, thereby reducing the risk of cracking of the first insulating and sealing member 85 from the fourth corner 82.

In some embodiments of the present application, as shown in FIG. 11, the joint between the first extending part 32 and the penetration part 33 is provided with a first corner 34 disposed facing the first housing wall 13, the first housing wall 13 includes a second corner 131 disposed corresponding to the first corner 34, and the first insulating and sealing member 85 includes a third corner 81 disposed corresponding to the first corner 34, where the first insulating and sealing member 85 includes a first sub-part 831 and a second portion 84, the material hardness of the first sub-part 831 is less than the material hardness of the second portion 84, and the first sub-part 831 defines the third corner 81.

Because the first insulating and sealing member 85 includes the third corner 81 disposed corresponding to the first corner 34, when the post terminal 2 is assembled and fixed on the first housing wall 13, the post terminal 2 compresses the first insulating and sealing member 85, and the first insulating and sealing member 85 is subjected to a relatively large force at the position of the third corner 81 and is thus prone to cracking. By providing the first sub-part 831 having a lower material hardness than the second portion 84, the first sub-part 831 may be easily compressed and deformed under the force to absorb the force, thereby reducing the risk of cracking of the first insulating and sealing member 85 from the third corner 81.

It is worth noting that the materials of the first portion 83 and the second portion 84 are not limited and may be specifically selected according to actual requirements. For example, the material of the first portion 83 may be selected from a compressible rubber material or a plastic material, such as PFA (i.e., a perfluoroalkoxy), or PP (i.e., polypropylene), or FKM (i.e., fluororubber), or EPDM (i.e., ethylene propylene diene monomer), thereby allowing the first portion 83 to exhibit good compressive deformation performance and effectively alleviate the problem of cracking. For example, the material of the second portion 84 may be selected from insulating materials with relatively high hardness, such as PPS (i.e., polyphenylene sulfide, a novel high-performance thermoplastic resin) or LCP (i.e., liquid crystal polymer), such that the second portion 84 exhibits good hardness and provides support, thereby enabling good control of the compression amount of the first insulating and sealing member 85 and improving the sealing performance.

It is worth noting that the first portion 83 may further include both the first sub-part 831 and the second sub-part 832, thereby more comprehensively reducing the risk of cracking at the weak position of the first insulating and sealing member 85 and improving the structural reliability of the first insulating and sealing member 85. In addition, it is worth noting that the materials of the first sub-part 831 and the second sub-part 832 may be the same or different, and may be specifically determined based on the actual situation.

In some embodiments of the present application, as shown in FIG. 10, the joint between the first extending part 32 and the penetration part 33 is provided with the first corner 34 disposed facing the first housing wall 13, the first housing wall 13 includes the second corner 131 disposed corresponding to the first corner 34, and the first insulating and sealing member 85 includes the fourth corner 82 disposed corresponding to the second corner 131, where at least one of the second corner 131 and the fourth corner 82 is formed as a chamfer (e.g., a rounded corner or an angled chamfer). That is, only the second corner 131 may be formed as a chamfer, while the fourth corner 82 is formed as a non-chamfered corner, e.g., a right angle, an acute angle, or an obtuse angle; or, only the fourth corner 82 may be formed as a chamfer, while the second corner 131 is formed as a non-chamfered corner, e.g., a right angle, an acute angle, or an obtuse angle; or, both the second corner 131 and the fourth corner 82 may be formed as chamfers.

When the post terminal 2 is assembled and fixed on the first housing wall 13, the second corner 131 tends to compress the fourth corner 82, causing the first insulating and sealing member 85 to crack from the position of the fourth corner 82. If the second corner 131 is configured as a chamfer, the area where the second corner 131 applies force to the fourth corner 82 can be increased, such that the force application positions are dispersed, thereby reducing the compressive force concentration at the position of the fourth corner 82 and reducing the risk of cracking of the first insulating and sealing member 85 from the position of the fourth corner 82. If the fourth corner 82 is configured as a chamfer, when the second corner 131 applies force to the fourth corner 82, the force-bearing area of the fourth corner 82 can be increased, such that the force applied to the position of the fourth corner 82 is dispersed, thereby reducing the risk of cracking of the first insulating and sealing member 85 from the position of the fourth corner 82. As such, by forming at least one of the second corner 131 and the fourth corner 82 as a chamfer, the risk of cracking of the first insulating and sealing member 85 from the position of the fourth corner 82 can be reduced.

In some embodiments of the present application, regardless of whether at least one of the second corner 131 and the fourth corner 82 is processed into a chamfer, a fitting gap may be provided between the second corner 131 and the fourth corner 82. In this way, the compression of the fourth corner 82 by the second corner 131 can be reduced to some extent, thereby reducing the risk of cracking of the first insulating and sealing member 85 from the position of the fourth corner 82.

In some embodiments of the present application, as shown in FIG. 11, the joint between the first extending part 32 and the penetration part 33 is provided with the first corner 34 disposed facing the first housing wall 13, the first housing wall 13 includes the second corner 131 disposed corresponding to the first corner 34, and the first insulating and sealing member 85 includes the third corner 81 disposed corresponding to the first corner 34, where at least one of the first corner 34 and the third corner 81 is formed as a chamfer (e.g., a rounded corner or angled chamfer). That is, only the first corner 34 may be formed as a chamfer, while the third corner 81 is formed as a non-chamfered corner, e.g., a right angle, an acute angle, or an obtuse angle; or, only the third corner 81 may be formed as a chamfer, while the first corner 34 is formed as a non-chamfered corner, e.g., a right angle, an acute angle, or an obtuse angle; or, both the first corner 34 and the third corner 81 may be formed as chamfers.

When the post terminal 2 is assembled and fixed on the first housing wall 13, the first corner 34 tends to compress the third corner 81, causing the first insulating and sealing member 85 to crack from the position of the third corner 81. If the first corner 34 is configured as a chamfer, the area where the first corner 34 applies force to the third corner 81 can be increased, such that the force application positions are dispersed, thereby reducing the compressive force concentration at the position of the third corner 81 and reducing the risk of cracking of the first insulating and sealing member 85 from the position of the third corner 81. If the third corner 81 is configured as a chamfer, when the first corner 34 applies force to the third corner 81, the force-bearing area of the third corner 81 can be increased, such that the force applied to the position of the third corner 81 is dispersed, thereby reducing the risk of cracking of the first insulating and sealing member 85 from the position of the third corner 81. As such, by forming at least one of the first corner 34 and the third corner 81 as a chamfer, the risk of cracking of the first insulating and sealing member 85 from the position of the third corner 81 can be reduced.

In some embodiments of the present application, regardless of whether at least one of the first corner 34 and the third corner 81 is processed into a chamfer, a fitting gap may be provided between the first corner 34 and the third corner 81. In this way, the compression of the third corner 81 by the first corner 34 can be reduced to some extent, thereby reducing the risk of cracking of the first insulating and sealing member 85 from the position of the third corner 81.

It is worth noting that regardless of whether the first sub-part 831 is disposed at the third corner 81, the third corner 81 may be processed into a chamfer; regardless of whether the second sub-part 832 is disposed at the fourth corner 82, the fourth corner 82 may be processed into a chamfer.

It is worth noting that when the battery cell 102 includes the first gasket 91 disposed between the first extending part 32 and the first insulating and sealing member 85, as shown in FIG. 10, if the radial dimension of the first gasket 91 is sufficient, the third corner 81 and the post terminal 2 may be spaced apart to a certain extent, thereby protecting the third corner 81. Meanwhile, by providing a chamfer or the second sub-part 832 at the fourth corner 82, the fourth corner 82 can be protected. Certainly, when the first gasket 91 is provided, a chamfer or the first sub-part 831 may also be disposed at the third corner 81 to further alleviate the problem of cracking of the third corner 81.

It is worth noting that when the battery cell 102 includes the second gasket 92 disposed between the first insulating and sealing member 85 and the surface of the first housing wall 13 on a side facing the first extending part 32, as shown in FIG. 11, if the radial dimension of the second gasket 92 is sufficient, the fourth corner 82 and the first housing 1 may be spaced apart to a certain extent, thereby protecting the fourth corner 82. Meanwhile, by providing the chamfer or the first sub-part 831 at the third corner 81, the third corner 81 can be protected. Certainly, when the second gasket 92 is provided, a chamfer or the second sub-part 832 may also be disposed at the fourth corner 82 to further alleviate the problem of cracking of the fourth corner 82.

In some embodiments of the present application, as shown in FIG. 8, the post terminal 2 further includes a second extending part 38 connected to the penetration part 33 and extending in a direction away from the central axis L of the mounting hole 12 relative to the penetration part 33. The second extending part 38 and the first extending part 32 extend to the inner side and the outer side of the first housing wall 13, respectively. The penetration part 33 and the second extending part 38 constitute a second post terminal part 39. The battery cell 102 further includes a second insulating and sealing member 86 fitted between the second post terminal part 39 and the first housing wall 13 and disposed separately from the first insulating and sealing member 85.

As such, because the post terminal 2 includes the first extending part 32 and the second extending part 38 disposed on the inner side and the outer side of the first housing wall 13, respectively, the fit between the post terminal 2 and the first housing wall 13 can be more stable and secure. In addition, because the insulating and sealing structure 8 includes the first insulating and sealing member 85 and the second insulating and sealing member 86 that are disposed separately from each other, the first insulating and sealing member 85 and the second insulating and sealing member 86 may be independently mounted, thereby reducing the assembly difficulty and ensuring reliable insulating and sealing fit at all positions between the post terminal 2 and the first housing wall 13.

In addition, in some embodiments, with reference to FIG. 8, the battery cell 102 may further include a third insulating and sealing member 87. The third insulating and sealing member 87 may be disposed between the second extending part 38 and the housing 1 and may abut against the active substance-coated part 71 of the battery cell assembly 7. This configuration not only improves the insulation between the battery cell assembly 7 and the housing 1, but also enhances the stability of the fit between the battery cell assembly 7 and the housing 1, thereby improving the reliability of the battery cell 102. Alternatively, the third insulating and sealing member 87 may be omitted, and an insulating bracket (not shown) may be sleeved over the end part of the active substance-coated part 71. The insulating bracket abuts against the inner surface of the housing 1, thereby facilitating the protection of the battery cell assembly 7 during the installation of the battery cell assembly 7 in the housing 1, avoiding scratching between the housing 1 and the battery cell assembly 7, and improving the insulation between the battery cell assembly 7 and the housing 1. Meanwhile, this configuration can improve the stability of the fit between the battery cell assembly 7 and the housing 1, thereby improving the reliability of the battery cell 102.

In some embodiments of the present application, as shown in FIG. 7, the post terminal 2 includes a post terminal body 3 and a post terminal cover plate 4. The post terminal body 3 includes the first post terminal part 35 and the second post terminal part 39. The first extending part 32 extends to the outer side of the outer surface of the first housing wall 13. The post terminal cover plate 4 lids a side of the first post terminal part 35 distal to the second post terminal part 39, and the post terminal body 3 is connected to the post terminal cover plate 4 by welding. The material hardness of the second insulating and sealing member 86 is less than the material hardness of the first insulating and sealing member 85.

As such, the material hardness of the first insulating and sealing member 85 is greater than the material hardness of the second insulating and sealing member 86. Compared with the first insulating and sealing member 85, the second insulating and sealing member 86 is more easily compressible and deformable and exhibits better sealing effect. However, the first insulating and sealing member 85 exhibits stronger heat resistance than the second insulating and sealing member 86. For example, the first insulating and sealing member 85 is a plastic member, and the second insulating and sealing member 86 is a rubber member. Therefore, during the welding of the post terminal body 3 and the post terminal cover plate 4, the thermal impact on the second insulating and sealing member 86 can be reduced as much as possible, thereby improving the reliability of the sealing between the first housing wall 13 and the post terminal 2.

In some embodiments of the present application, as shown in FIG. 7, the first extending part 32 protrudes from the penetration part 33 toward the outer side of the first housing wall 13 to define a recess 31 between the first extending part 32 and the penetration part 33. An edge of the post terminal cover plate 4 is disposed in the recess 31 and is welded to the penetration part 33 in a penetrating manner, and the welding structure formed by the welding is spaced apart from the first extending part 32.

As such, the shrinkage stress generated by the solidification of the molten pool formed by welding can be blocked by the spacing and is difficult to be or less likely to be transmitted to the first extending part 32, thus alleviating the warping of the first extending part 32 and enabling the first extending part 32 to press tightly against the first insulating and sealing member 85 and the second insulating and sealing member 86, thereby improving the insulation and sealing effect. In addition, because the edge of the post terminal cover plate 4 is disposed in the recess 31 and is welded to the penetration part 33 in a penetrating manner, rather than being butt-welded to the first extending part 32, it is unnecessary to maintain a small assembly gap between the edge of the post terminal cover plate 4 and the first extending part 32 for butt welding purposes. Therefore, a relatively large spacing may be allowed between the edge of the post terminal cover plate 4 and the first extending part 32, thereby improving the compatibility of the post terminal body 3. This is conducive to reducing the processing precision of the post terminal cover plate 4 and the post terminal body 3.

In some embodiments of the present application, as shown in FIG. 7, the battery cell 102 has an accommodating cavity 11 formed on the inner side of the first housing wall 13. The post terminal 2 includes the post terminal body 3. The post terminal body 3 is provided with an accommodating groove 36 opening in a direction away from the accommodating cavity 11. The post terminal body 3 is provided with a communication hole 37, and the communication hole 37 penetrates through a groove wall of the accommodating groove 36 on a side proximal to the accommodating cavity 11 and communicates the accommodating cavity 11 with the accommodating groove 36. For example, when the penetration part 33 is annular, the accommodating groove 36 is located in the inner ring region of the penetration part 33. For example, the accommodating groove 36 may be jointly defined by the penetration part 33 and a support part located in the inner ring region of the penetration part 33, and the communication hole 37 penetrates through the support part.

As such, when the electrolyte is injected into the battery cell 102, the electrolyte may be injected into the accommodating groove 36 and then flow toward the accommodating cavity 11 through the communication hole 37, where the accommodating groove 36 can serve as a buffer for the electrolyte, thereby mitigating issues such as electrolyte splashing and overflow. In addition, the side wall of the accommodating groove 36 (that is, a groove wall extending from the opening of the accommodating groove 36 toward the accommodating cavity 11) can prevent the electrolyte from splashing out to some extent, thereby reducing contamination caused by the electrolyte to the outside and facilitating fast electrolyte injection. In addition, because no separate liquid injection channel needs to be formed on the housing 1, special processing of the housing 1 is unnecessary, which helps to reduce the structural complexity and processing difficulty of the housing 1.

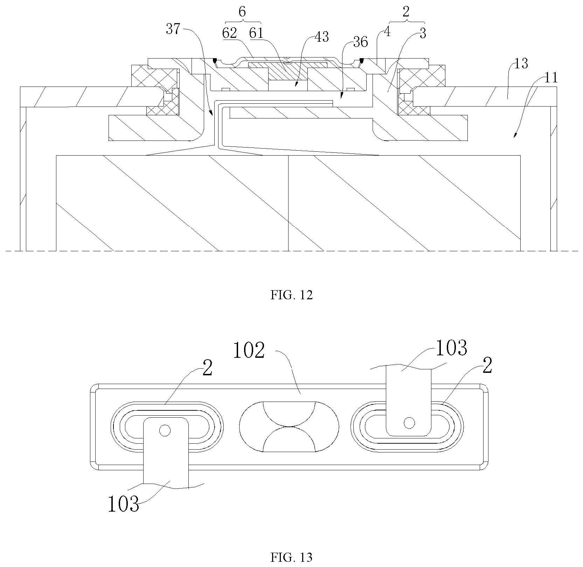

Illustratively, as shown in FIG. 12, the side of the recess 31 facing the central axis L of the mounting hole 12 is open, so as to be in communication with the accommodating groove 36. As such, the compactness of the fit between the post terminal body 3 and the post terminal cover plate 4 can be improved, and the structure and processing of the post terminal cover plate 4 can be simplified.

In some embodiments of the present application, as shown in FIG. 7, the battery cell 102 includes a battery cell assembly 7. The battery cell assembly 7 includes an active substance-coated part 71 received in the accommodating cavity 11 and a conductive part 72 connected to the active substance-coated part 71. The conductive part 72 is provided in the communication hole 37 in a penetrating manner to be at least partially received in the accommodating groove 36.

It is worth noting that one or a plurality of communication holes 37 may be provided, and the conductive part 72 may be provided, in a penetrating manner, in at least one communication hole 37. Illustratively, at least one communication hole 37 may allow the electrolyte to pass through. For example, at least one communication hole 37 remains unobstructed (that is, not provided with the conductive part 72 in a penetrating manner), such that the electrolyte can pass through the communication hole without obstruction from the conductive part 72. For another example, at least one communication hole 37 still allows the electrolyte to pass through even if it is provided with the conductive part 72 in a penetrating manner.

As such, by allowing the conductive part 72 to be at least partially received in the accommodating groove 36, the conductive part 72 can at least partially occupy the space in the accommodating groove 36, thereby reducing the space of the accommodating cavity 11 occupied by the conductive part 72 and saving the space in the accommodating cavity 11 to receive the active substance-coated part 71 with a larger volume. This is conducive to increasing the energy density of the battery cell 102, or to reducing the dimension of the battery cell 102 when the energy density of the battery cell 102 remains unchanged.

It can be understood that the active substance-coated part 71 may include a current collector coated with an active substance layer, and the conductive part 72 may include only a tab part, or may include a tab part, an adapting piece electrically connected to the tab part, and the like, which is not limited here.

In some embodiments, the conductive part 72 is welded to the post terminal body 3 to form an electrical connection, thereby enabling the electrode output of the battery cell assembly 7 from the post terminal body 3. Illustratively, as shown in FIG. 7, by welding the conductive part 72 to the groove wall of the accommodating groove 36 on the side proximal to the accommodating cavity 11, the compactness of the fit can be improved, and the welding operation between the two is facilitated. Certainly, the present application is not limited thereto. In other embodiments, the conductive part 72 may also be welded to the post terminal cover plate 4 to form an electrical connection, which is not limited here.

In some embodiments of the present application, as shown in FIG. 12, the post terminal 2 includes a post terminal cover plate 4 lidding the post terminal body 3, and the post terminal cover plate 4 is provided with a liquid injection hole 43 capable of communicating with the accommodating groove 36. The battery cell 102 further includes a sealing structure 6 for sealing the liquid injection hole 43.

In this way, when the electrolyte needs to be injected into the battery cell 102, the sealing structure 6 is not first mounted at the liquid injection hole 43, or the sealing structure 6 is kept in a state where the liquid injection hole 43 is open. In this case, the electrolyte can be injected into the accommodating groove 36 through the liquid injection hole 43. After the injection, the sealing structure 6 may be mounted at the liquid injection hole 43, or the sealing structure 6 may be switched to a state where the liquid injection hole 43 is closed, thereby sealing and closing the liquid injection hole 43 to prevent the electrolyte from overflowing and prevent external foreign matters from entering the accommodating cavity 11 via the liquid injection hole 43, thereby improving the reliability of the battery cell 102.

As such, by forming the liquid injection hole 43 on the post terminal cover plate 4 with a relatively small opening and a position close to the outside, reliable sealing of the liquid injection inlet can be more easily achieved through the sealing structure 6, thereby improving the working reliability of the battery cell 102 and enabling flexible and diversified design of the sealing structure 6.

In some embodiments, as shown in FIG. 12, the post terminal cover plate 4 is not provided with a portion that serves as a stopper at the outer side (i.e., a side distal to the accommodating cavity 11) of the sealing structure 6, such that the sealing structure 6 is suitable for being mounted on the post terminal cover plate 4 from the outer side (i.e., the side distal to the accommodating cavity 11) of the post terminal cover plate 4. In this way, by allowing the sealing structure 6 to be mounted from the outer side of the post terminal cover plate 4 to the post terminal cover plate 4 to seal the liquid injection hole 43, the sealing structure 6 is allowed to be mounted after the liquid injection, thereby ensuring the sealing performance of the liquid injection hole 43. In addition, the mounting position is close to the outer side, which facilitates the rapid assembling of the sealing structure 6. In addition, the mounting of the sealing structure 6 will not adversely affect the connection between the post terminal body 3 and the post terminal cover plate 4, thereby ensuring the reliability of the connection between the post terminal cover plate 4 and the post terminal body 3.

The sealing structure 6 may be in a detachable form, or may be in a non-detachable fixed form. Illustratively, when the sealing structure 6 is in a detachable form, the maintenance of the liquid injection hole 43 is facilitated. For example, when the electrolyte needs to be replenished, the sealing structure 6 can be detached, the liquid injection hole 43 can be opened, the electrolyte can be replenished and injected into the accommodating cavity 11 through the liquid injection hole 43, and then the sealing structure 6 can be re-mounted. For example, the sealing structure 6 can be detachably connected to the post terminal cover plate 4 by means of a thread, a rotary fastener, or the like, thereby facilitating the disassembly and assembly.

Illustratively, when the sealing structure 6 is in a non-detachable fixed form, the sealing structure 6 may be fixed to the post terminal cover plate 4 by welding, riveting, or the like, thereby improving the sealing reliability provided by the sealing structure 6 for the liquid injection hole 43. For example, the liquid injection hole 43 may be in a multi-segment form, and the sealing structure 6 may include a first sealing member 61 in interference fit with the liquid injection hole 43 and a second sealing member 62 that covers the first sealing member 61 and is welded to the post terminal cover plate 4.

Alternatively, in some embodiments, the second sealing member 62 may be configured to be detachably connected to the post terminal cover plate 4 by means of a rotary fastener to limit the first sealing member 61 in a position in interference fit with the liquid injection hole 43.

In some embodiments of the present application, as shown in FIG. 12, the sealing structure 6 is at least partially embedded in the liquid injection hole 43. That is, the sealing structure 6 may be entirely embedded in the liquid injection hole 43, or the sealing structure 6 may be only partially embedded in the liquid injection hole 43. As such, in one respect, the space in the liquid injection hole 43 can be fully utilized to improve the sealing reliability provided by the sealing structure 6 for the liquid injection hole 43; in another aspect, the height of the sealing structure 6 protruding beyond the liquid injection hole 43 can be reduced to decrease the space occupied by the sealing structure 6 outside the post terminal cover plate 4. This is beneficial for reducing the interference impact on the busbar component 103, increasing the connection area between the busbar component 103 and the post terminal cover plate 4, and improving the current passage efficiency.

In some embodiments of the present application, as shown in FIG. 12, the first housing wall 13 is an integrally formed cover plate. Alternatively, as shown in FIG. 7, the housing 1 further includes a second housing wall 14. The first housing wall 13 and at least one second housing wall 14 are integrally formed, and the second housing wall 14 extends toward a side of the first housing wall 13 in a thickness direction. As such, the flexible design of the structural position of the post terminal 2 can be achieved, thereby expanding the application range of the battery cell 102 according to the embodiments of the present application.

It is worth noting that the second housing wall 14 may extend out from the edge of the first housing wall 13. When the first housing wall 13 is rectangular, at least one of the four edges of the first housing wall 13 may extend out of the second housing wall 14. For example, only one edge of the first housing wall 13 extends out of the second housing wall 14, or only two edges of the first housing wall 13 may extend out of the second housing wall 14, or three edges of the first housing wall 13 may extend out of the second housing wall 14, or all four edges of the first housing wall 13 may extend out of the second housing wall 14. Illustratively, when the housing 1 is a rectangular housing, any wall surface of the rectangular housing may serve as the first housing wall 13.

For example, the housing 1 may include a housing body and a cover plate. The housing body defines a space with one side open, and the cover plate is disposed on the open side of the housing body to form the accommodating cavity 11 between the housing body and the cover plate. In this case, the surface of the housing body on a side opposite to the cover plate serves as the first housing wall 13, and the wall surface of the housing body connected between the first housing wall 13 and the cover plate serves as the second housing wall 14; or the surface of the housing body on a side opposite to the cover plate serves as the second housing wall 14, and the wall surface of the housing body connected between the second housing wall 14 and the cover plate serves as the first housing wall 13; or the cover plate serves as the first housing wall 13. All the situations are acceptable.

According to the embodiments of the second aspect of the present application, the embodiments of the present application further provide a battery 100. The battery includes the battery cell 102 according to any one of the above embodiments. It is worth noting that the battery 100 according to the embodiments of the present application may include a case, or may not include a case. As such, the reliability of the battery cell 102 according to the embodiments of the present application is improved, thereby facilitating the improvement of the performance of the battery 100.

Illustratively, as shown in FIG. 13, the battery 100 may further include a busbar component 103. A plurality of battery cells 102 are provided and at least two of the battery cells are electrically connected by the busbar component 103. As such, this enables the plurality of battery cells 102 to be connected in series and/or in parallel. For example, when a plurality of battery cells 102 are connected in series, the post terminal cover plate 4 of the anode of one battery cell 102 is connected to the post terminal cover plate 4 of the cathode of the next battery cell 102 through one busbar component 103. Meanwhile, the post terminal cover plate 4 of the cathode of the battery cell 102 is connected to the post terminal cover plate 4 of the anode of the previous battery cell 102 through another busbar component 103.

According to the embodiments of the third aspect of the present application, the embodiments of the present application further provide an electric device. The electric device includes the battery 100 according to any one of the above embodiments. The battery 100 is configured to provide electric energy for the electric device. The electric device may be any one of the aforementioned devices or systems that use the battery 100. Because the performance of the battery 100 is improved, the power performance of the electric device during operation can be improved.

A battery cell 102 according to a specific embodiment of the present application is described below.

The battery cell 102 includes a housing 1, a post terminal 2, and an insulating and sealing structure 8. The housing 1 includes a first housing wall 13. The first housing wall 13 includes a mounting hole 12, and the post terminal 2 includes a penetration part 33 provided in the mounting hole 12 in a penetrating manner, a first extending part 32 connected to the penetration part 33 and extending in a direction away from a central axis L of the mounting hole 12 relative to the penetration part 33, and a second extending part 38 connected to the penetration part 33 and extending in a direction away from the central axis L of the mounting hole 12 relative to the penetration part 33. The first extending part 32 extends to an outer side of an outer surface of the first housing wall 13, and the second extending part 38 extends to an inner side of an inner surface of the first housing wall 13. The post terminal 2 forms the first extending part 32 through flanging and riveting.

The penetration part 33 and the first extending part 32 constitute a first post terminal part 35, and the insulating and sealing structure 8 includes a first insulating and sealing member 85 fitted between the first post terminal part 35 and the first housing wall 13. The penetration part 33 and the second extending part 38 constitute a second post terminal part 39, and the insulating and sealing structure 8 includes a second insulating and sealing member 86 fitted between the second post terminal part 39 and the first housing wall 13 and disposed separately from the first insulating and sealing member 85. The first insulating and sealing member 85 is composed of a first portion 83 and a second portion 84 as a non-detachable integrated member, the material hardness of the first portion 83 is less than the material hardness of the second portion 84, and the first portion 83 is disposed at the corner position of the first insulating and sealing member 85.

The battery cell 102 includes a cushion member 9 disposed between the first post terminal part 35 and the first housing wall 13 and configured to buffer the acting force applied by at least one of the first post terminal part 35 and the first housing wall 13 to the first insulating and sealing member 85. The cushion member 9 includes a first gasket 91 and a second gasket 92. The first gasket 91 is disposed between the first extending part 32 and the first insulating and sealing member 85, and the material hardness of the first gasket 91 is greater than the material hardness of the first insulating and sealing member 85. The second gasket 92 is disposed between the first insulating and sealing member 85 and a surface of the first housing wall 13 on a side facing the first extending part 32, and the material hardness of the second gasket 92 is less than the material hardness of the first insulating and sealing member 85.

During the assembling, the first insulating and sealing member 85, the second insulating and sealing member 86, and the post terminal 2 may be first mounted at the mounting hole 12 of the first housing wall 13, and then the first extending part 32 is formed by using a riveting process. In this case, the post terminal 2 applies an acting force to the first insulating and sealing member 85, and correspondingly, the first housing wall 13 applies a reaction force to the first insulating and sealing member 85, causing cracking at and damage to the weak part of the first insulating and sealing member 85. By providing the first gasket 91 and the second gasket 92 to buffer the acting force, the problem of cracking at the weak part of the first insulating and sealing member 85 can be alleviated, thereby improving the reliability of the battery cell 102.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a first housing wall, wherein the first housing wall is provided with a mounting hole;
a post terminal comprising a penetration part provided in the mounting hole in a penetrating manner and a first extending part connected to the penetration part and extending in a direction away from a central axis of the mounting hole relative to the penetration part, wherein the first extending part extends to an outer side of an outer surface or an inner side of an inner surface of the first housing wall, and the penetration part and the first extending part constitute a first post terminal part;
a first insulating and sealing member fitted between the first post terminal part and the first housing wall; and
a cushion member disposed between the first post terminal part and the first housing wall and configured to buffer an acting force applied by at least one of the first post terminal part and the first housing wall to the first insulating and sealing member.

2. The battery cell according to claim 1, wherein the cushion member is disposed between the first housing wall and the first insulating and sealing member and/or between the first post terminal part and the first insulating and sealing member.

3. The battery cell according to claim 2, wherein the cushion member comprises a first gasket, and the first gasket is disposed between the first extending part and the first insulating and sealing member.

4. The battery cell according to claim 3, wherein a material hardness of the first gasket is greater than a material hardness of the first insulating and sealing member.

5. The battery cell according to claim 3 or 4, wherein the first gasket protrudes from or is flush with a surface of the first insulating and sealing member on a side proximal to the penetration part in a direction close to the penetration part.

6. The battery cell according to any one of claims 2 to 5, wherein the cushion member comprises a second gasket, the second gasket is disposed between the first insulating and sealing member and a surface of the first housing wall on a side facing the first extending part, and a material hardness of the second gasket is less than the material hardness of the first insulating and sealing member.

7. The battery cell according to any one of claims 2 to 6, wherein the cushion member comprises a third gasket, and the third gasket is disposed between the penetration part and the first insulating and sealing member.

8. The battery cell according to any one of claims 3 to 5, wherein the cushion member further comprises a third gasket, the third gasket is disposed between the penetration part and the first insulating and sealing member, and the first gasket and the third gasket are an integrated member.

9. The battery cell according to any one of claims 1 to 8, wherein the cushion member is formed as an annular structure extending around an entire circumference along a circumferential direction of the mounting hole.

10. The battery cell according to any one of claims 1 to 9, wherein a fitting gap is provided between the penetration part and the first insulating and sealing member.

11. The battery cell according to any one of claims 3 to 5, wherein a joint between the first extending part and the penetration part is provided with a first corner disposed facing the first housing wall, the first housing wall comprises a second corner disposed corresponding to the first corner, and the first insulating and sealing member comprises a fourth corner disposed corresponding to the second corner, wherein the first insulating and sealing member comprises a second sub-part and a second portion, a material hardness of the second sub-part is less than a material hardness of the second portion, and the second sub-part defines the fourth corner.

12. The battery cell according to any one of claims 3 to 5 and 11, wherein the joint between the first extending part and the penetration part is provided with the first corner disposed facing the first housing wall, the first housing wall comprises the second corner disposed corresponding to the first corner, and the first insulating and sealing member comprises the fourth corner disposed corresponding to the second corner, wherein at least one of the second corner and the fourth corner is formed as a chamfer.

13. The battery cell according to claim 6, wherein a joint between the first extending part and the penetration part is provided with a first corner disposed facing the first housing wall, and the first insulating and sealing member comprises a third corner disposed corresponding to the first corner, wherein the first insulating and sealing member comprises a first sub-part and a second portion, a material hardness of the first sub-part is less than a material hardness of the second portion, and the first sub-part defines the third corner.

14. The battery cell according to claim 6 or 13, wherein the joint between the first extending part and the penetration part is provided with the first corner disposed facing the first housing wall, and the first insulating and sealing member comprises the third corner disposed corresponding to the first corner, wherein at least one of the first corner and the third corner is formed as a chamfer.

15. The battery cell according to any one of claims 1 to 14, wherein the post terminal forms the first extending part through flanging and riveting.

16. The battery cell according to any one of claims 1 to 15, wherein the post terminal further comprises a second extending part connected to the penetration part and extending in a direction away from the central axis of the mounting hole relative to the penetration part, the second extending part and the first extending part extend to the inner side and the outer side of the first housing wall, respectively, the penetration part and the second extending part constitute a second post terminal part, and the battery cell further comprises a second insulating and sealing member fitted between the second post terminal part and the first housing wall and disposed separately from the first insulating and sealing member.

17. The battery cell according to claim 16, wherein the post terminal comprises a post terminal body and a post terminal cover plate, the post terminal body comprises the first post terminal part and the second post terminal part, the first extending part extends to the outer side of the outer surface of the first housing wall, the post terminal cover plate lids a side of the first post terminal part distal to the second post terminal part, the post terminal body is connected to the post terminal cover plate by welding, and a material hardness of the second insulating and sealing member is less than the material hardness of the first insulating and sealing member.

18. The battery cell according to claim 17, wherein the first extending part protrudes from the penetration part toward an outer side of the first housing wall to define a recess between the first extending part and the penetration part, an edge of the post terminal cover plate is disposed in the recess and is welded to the penetration part in a penetrating manner, and a welding structure formed by the welding is spaced apart from the first extending part.

19. The battery cell according to any one of claims 1 to 18, wherein the battery cell has an accommodating cavity formed on an inner side of the first housing wall, the post terminal comprises the post terminal body, the post terminal body is provided with an accommodating groove opening in a direction away from the accommodating cavity, the post terminal body is provided with a communication hole, and the communication hole penetrates through a groove wall of the accommodating groove on a side proximal to the accommodating cavity and communicates the accommodating cavity with the accommodating groove.

20. The battery cell according to claim 19, wherein the battery cell comprises a battery cell assembly, the battery cell assembly comprises an active substance-coated part received in the accommodating cavity and a conductive part connected to the active substance-coated part, and the conductive part is provided in the communication hole in a penetrating manner to be at least partially received in the accommodating groove.

21. The battery cell according to any one of claims 19 to 20, wherein the post terminal comprises the post terminal cover plate lidding the post terminal body, the post terminal cover plate is provided with a liquid injection hole capable of communicating with the accommodating groove, and the battery cell further comprises a sealing structure for sealing the liquid injection hole.

22. A battery, comprising the battery cell according to any one of claims 1 to 21.

23. An electric device, comprising the battery according to claim 22.
